(19) Europäisches Patentamt
European Patent Office
Office européen des brevets

(11) **EP 2 352 589 B1**

(12) **EUROPÄISCHE PATENTSCHRIFT**

(45) Veröffentlichungstag und Bekanntmachung des Hinweises auf die Patenterteilung:
**05.12.2012 Patentblatt 2012/49**

(51) Int Cl.:
*C02F 1/42* *(2006.01)*    *B01J 49/00* *(2006.01)*
*C02F 1/467* *(2006.01)*

(21) Anmeldenummer: **09771278.0**

(22) Anmeldetag: **21.10.2009**

(86) Internationale Anmeldenummer:
**PCT/DE2009/001469**

(87) Internationale Veröffentlichungsnummer:
**WO 2010/045934 (29.04.2010 Gazette 2010/17)**

(54) **VERFAHREN ZUM BETRIEB EINER WASSERENTHÄRTUNGSANLAGE MIT BESTIMMUNG VERBLEIBENDER, DURCHFÜHRBARER REGENERATIONEN**

METHOD FOR OPERATING A WATER SOFTENING SYSTEM INCLUDING THE DETERMINATION OF REMAINING REGENERATIONS THAT CAN BE CONDUCTED

PROCÉDÉ POUR FAIRE FONCTIONNER UNE INSTALLATION D'ADOUCISSEMENT DE L'EAU AVEC DÉTERMINATION DES RÉGÉNÉRATIONS RESTANTES À EFFECTUER

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.10.2008 DE 102008052959**

(43) Veröffentlichungstag der Anmeldung:
**10.08.2011 Patentblatt 2011/32**

(73) Patentinhaber: **Judo Wasseraufbereitung GmbH 71364 Winnenden (DE)**

(72) Erfinder: **SÖCKNICK, Ralf 70806 Kornwestheim (DE)**

(74) Vertreter: **Kohler Schmid Möbus Patentanwälte Ruppmannstraße 27 70565 Stuttgart (DE)**

(56) Entgegenhaltungen:
**DE-T2- 60 120 826    DE-T2- 69 326 137
US-B1- 6 726 817**

**Beschreibung**

Die Erfindung betrifft ein Verfahren zum Betrieb einer Wasserenthärtungsanlage, wobei die Wasserenthärtungsanlage umfasst

- eine Enthärtungsvorrichtung, insbesondere umfassend mindestens einen Tank mit einem Ionentauscherharz,
- ein Vorratsgefäß, in dem festes Regeneriersalz zur Herstellung einer Regeneriermittellösung bevorratet ist,
- eine elektronische Steuereinrichtung, insbesondere zur automatischen Auslösung einer Regeneration der Enthärtungsvorrichtung mit Regeneriermittellösung, und
- eine Eingabevorrichtung zur Eingabe einer Menge an festem Regeneriersalz, wobei die Steuereinrichtung im Betrieb der Wasserenthärtungsanlage die Erschöpfung des Vorrats an festem Regeneriersalz überwacht.

Ein solches Verfahren ist bekannt geworden aus der DE 601 20 826 T2 (EP 1 147 736 B1).

Wasserenthärtung wird überall dort eingesetzt, wo über die üblichen Versorgungssysteme (etwa das Trinkwassernetz) lediglich relativ hartes Wasser zur Verfügung steht, jedoch aus technischen Gründen oder Komfortgründen ein weicheres Wasser gewünscht ist.

Bei der Wasserenthärtung werden Enthärtungsvorrichtungen eingesetzt, die meist nach dem Ionenaustauschverfahren arbeiten. Die im Wasser enthaltenen Härtebildner (Calcium- und Magnesium-Ionen) werden dabei in einem Ionentauscherharz gegen Natrium-Ionen ausgetauscht. Bei Erschöpfung des Ionentauscherharzes muss dieses regeneriert werden, etwa durch Spülung mit einer Salzsole.

Zur Vorbereitung einer Regeneration ist es bekannt, eine Salzsole in einem Gefäß durch Lösen von festem Salz (Regeneriersalz) in Wasser herzustellen. Bei Wasserenthärtungsanlagen mit automatischer Regeneration wird üblicherweise die Salzsole mittels, und insbesondere innerhalb, der Wasserenthärtungsanlage hergestellt; die Wasserenthärtungsanlage hält dafür festes Regeneriersalz in einem Vorratsgefäß vor. In vielen Fällen ist das Gefäß, in dem die Salzsole hergestellt wird, dabei gleichzeitig auch das Vorratsgefäß für das feste Regeneriersalz. Um für einen ordnungsgemäßen Betrieb der Wasserenthärtungsanlage Salzsole für eine notwendige Regeneration bereit halten zu können, muss Regeneriersalz von Zeit zu Zeit in das Vorratsgefäß nachgefüllt werden, und insbesondere sollte eine vollständige Erschöpfung des Regeneriersalzes zur Vermeidung von Härtedurchbrüchen vermieden werden.

Aus der DE 44 25 706 B4 ist eine Wasserenthärtungsanlage bekannt, bei der die in einem Behälter (Vorratsgefäß) befindliche Menge an festem Salz mittels am Behälter befindlichen Markierungen abgelesen und über eine manuelle Eingabevorrichtung in eine elektronischen Steuerschaltung eingegeben und gespeichert wird. Zur Vorbereitung von Regenerationen werden jeweils vorbestimmte Mengen an Wasser zum Salzvorrat gegeben, wodurch jeweils eine gesättigte Salzsole entsteht und ein Teil des Salzvorrats verbraucht wird. Die restliche Salzmenge im Vorratsgefäß wird über die Menge an hergestellter Salzsole in der elektronischen Steuerschaltung verfolgt, und bei niedrigem Salzstand wird ein Alarm ausgelöst.

Gemäß EP 1 331 203 A2 wird aus einem Salzvorrat in einem Salzbehälter (Vorratsgefäß) die Anzahl an verbleibenden Tagen bis zur vollständigen Entleerung des Salzbehälters berechnet gemäß der Formel:

$$DTE = (A/B) \times C - D,$$

wobei

DTE = verbleibende Tage bis Salzbehälter leer ist
A = Gesamtmenge an Salz im Salzbehälter
B = durchschnittlicher Salzverbrauch pro Regeneration
C = durchschnittliche Zeit in Tagen zwischen zwei Regenerationen
D = vergangene Tage seit der letzten Regeneration

Hierbei wird die Gesamtmenge an Salz im Salzbehälter wiederum mit Markierungen abgelesenen und manuell eingegeben.

Die Bestimmung einer in einem Vorratsgefäß einer Wasserenthärtungsanlage befindlichen Menge an Salz durch Ablesen der Menge an festem Material anhand von Markierungen (Eichstrichen) am Vorratsgefäß ist sehr ungenau. Einerseits liegt das üblicherweise verwendete feste Salz in Form von größeren Tabletten oder als Blocksalz vor, so dass das Ablesen anhand der Markierungen naturgemäß fehlerbehaftet ist. Andererseits wird die bereits in Lösung befindliche Menge an Salz beim Ablesen nicht mitberücksichtigt.

Die Bestimmung einer entnommenen Salzmenge durch Bestimmung der Menge an entnommener Regenerationslösung ist ungenau, weil die tatsächliche Konzentration der Salzlösung naturgemäß schwankt.

Schließlich ist die Bestimmung der Größen A, B, C und D sowie daraus die Berechnung von DTE gemäß obiger Formel sehr aufwändig.

Die DE 601 20 826 T2 (EP 1 147 736 B1) beschreibt eine Vorrichtung zur Überwachung eines Betriebszustandes eines Wasserenthärters. In einem Salzsoletank, welcher Salzsole für die Regeneration des Wasserenthärters bevorratet, kann durch ein Fenster ein Anwender einen Salzpegel bestimmen, insbesondere wenn Salz in den Salzsoletank nachgefüllt wurde. Der bestimmte Salzpegel wird über eine Zunahmetaste und eine Reduziertaste einer Regeleinrichtung bekannt gegeben. Die Regeleinrichtung überwacht über die Füllwasserströmungsgeschwindigkeit den Salzverbrauch bei nachfolgenden Regenerierzyklen, und aktiviert eine Niedrigsalzanzeige, falls der Salzpegel unter einen vorgegebenen Mindestpegel gefallen ist.

Aufgabe der Erfindung

Es ist die Aufgabe der vorliegenden Erfindung, ein Verfahren zum Betrieb einer Wasserenthärtungsanlage bereitzustellen, mit dem der Erschöpfungsgrad eines Salzvorrats auf einfache Weise mit verbesserter Genauigkeit überwacht werden kann.

Kurze Beschreibung der Erfindung

Diese Aufgabe wird gelöst durch ein Verfahren der eingangs genannten Art, das dadurch gekennzeichnet ist,

- dass der Steuereinrichtung mittels der Eingabevorrichtung diejenige Menge an festem Regeneriersalz übermittelt wird, die bei einer Nachfüllung des Vorratsgefäßes in das Vorratsgefäß eingefüllt wird, im folgenden genannt Nachfüllmenge,
- dass die Steuereinrichtung mittels eines in der Steuereinrichtung hinterlegten Umrechnungsfaktors aus der Nachfüllmenge eine Gesamtzahl an mit der Nachfüllmenge durchführbaren Regenerationen ableitet, wobei der Umrechnungsfaktor als ein durchschnittlicher Salzverbrauch pro Regeneration gewählt ist,
- und dass nach jeder Regeneration der Enthärtungsvorrichtung eine Anzahl an verbleibenden, durchführbaren Regenerationen um 1 reduziert wird.

Gemäß der vorliegenden Erfindung wird nicht eine im Vorratsgefäß vorhandene Salzmenge über die Eingabevorrichtung der elektronischen Steuereinheit bekannt gegeben, sondern eine bei einer Regeneriersalz-Nachfüllung in das Vorratsgefäß eingefüllte (nachgefüllte) Regeneriersalzmenge. Die Nachfüllmenge kann noch außerhalb des Vorratsgefäßes bestimmt werden, was besonders einfach, schnell und genau möglich ist, insbesondere durch wiegen. Insbesondere können standardisierte Regeneriersalz-Nachfüllpackungen mit vom Hersteller eingewogener Salzmenge eingesetzt werden. Aus der Nachfüllmenge wird über den Umrechnungsfaktor, der der bei einer Regeneration erwartungsgemäß verbrauchten Salzmenge entspricht, in eine Gesamtzahl (mit der Nachfüllmenge) durchführbarer Regenerationen umgerechnet. Diese Gesamtzahl an Regenerationen kann nun zumindest durchgeführt werden, bevor eine neuerliche Nachfüllung des Vorratsgefäßes mit Regeneriersalz notwendig ist. Die Verwendung des durchschnittlichen Salzverbrauches pro Regeneration für die Berechnung der Gesamtzahl der durchführbaren Regenerationen ist besonders einfach und in der Regel hinreichend genau. Der Umrechnungsfaktor ist eine gerätespezifische Größe und wird typischerweise einmalig werkseitig experimentell, beispielsweise nach DIN EN 14743, bestimmt. Der Umrechnungsfaktor ist in diesem Fall typischerweise fest in der elektronischen Steuereinrichtung hinterlegt.

Sofern noch Restsalz bzw. eine Restanzahl verbleibender durchführbarer Regenerationen vor der Nachfüllung zur Verfügung standen, bestimmt sich unmittelbar nach der Nachfüllung die Anzahl von verbleibenden, durchführbaren Regenerationen entsprechend der Summe aus der Restanzahl und der Gesamtzahl an mit der Nachfüllmenge durchführbaren Regenerationen. Es ist allerdings auch möglich, die Restanzahl aus Sicherheitsgründen zu vernachlässigen bzw. bei einer Nachfüllung von Regeneriersalz die Restanzahl mit "null" anzunehmen.

Bei einer jeden Regeneration wird in der elektronischen Steuereinrichtung die aktuelle Anzahl an verbleibenden, durchführbaren Regenerationen um eins vermindert, d.h. die Anzahl wird mit den ausgelösten Regenerationen rückwärts (abwärts) gezählt. Sobald die aktuelle Anzahl einen Schwellwert unterschreitet, wird üblicherweise eine Alarmmeldung ausgelöst, die den Bediener der Wasserenthärtungsanlage zu einer Nachfüllung von Regeneriersalz veranlassen soll. Eine Regeneration ist ein einfach zu bestimmendes Ereignis, und das Rückwärtszählen ist besonders einfach in der elektronischen Steuereinrichtung zu hinterlegen.

Beim Nachfüllen von festem Regeneriersalz in das Vorratsgefäß spielt es keine Rolle, in welcher Form das feste Salz vorliegt. Gerade bei handelsüblichem Blocksalz oder bei Salztabletten mit größerer Tablettengröße ist das Ablesen einer Füllstandsmarkierung am Behälter (Vorratsgefäß der Wasserenthärtungsanlage) schwierig und mit größeren Fehlern behaftet, weil die Füllstandsoberfläche uneben ist.

Wird die Salzmenge vor dem Einfüllen und vor dem Lösen in Wasser (etwa im Vorratsgefäß) bestimmt, so ist sichergestellt, dass die Gesamtmenge an Salz erfasst wird. Dagegen wird beim Ablesen eines Salzfüllstandes am Salzbehälter bereits gelöstes Regeneriersalz nicht berücksichtigt.

Die pro Regeneration benötigte Salzmenge ist anlagentypisch. Sie kann beispielsweise experimentell gemäß DIN EN 14743 bestimmt und in der elektronischen Steuereinrichtung hinterlegt werden. Aus der eingefüllten Gesamtsalzmenge und der pro Regeneration benötigten Menge an Salz lässt sich einfach und genau die Anzahl an mit dieser Salzmenge durchführbaren Regenerationen berechnen.

Der vorhandene Salzvorrat vermindert sich bei jeder Regeneration um die in der elektronischen Steuerung hinterlegte, für eine Regeneration benötigte Salzmenge. Die Anzahl der verbleibenden noch durchführbaren Regenerationen wird entsprechend nach jeder Regeneration um 1 reduziert.

Die für eine Regeneration benötigte Salzmenge kann durch Wiegen gemäß DIN EN 14743 genau bestimmt werden. Der Wert kann dann als Umrechnungsfaktor in der elektronischen Steuereinrichtung hinterlegt und bei jeder weiteren Nachfüllung verwendet werden. Dagegen ist die in DE 4425706 B4 und EP 1331203 A2 beschriebene Bestimmung der bei einer Regeneration verbrauchten Salzmenge durch Verwendung einer vorbestimmten oder mittels Wasserzähler erfassten Menge an Wasser zur Soleherstellung ungenau, weil die Solekonzentration abhängig von Lösezeiten, Temperatur und Salztablettengröße schwankt.

Bevorzugte Varianten der Erfindung

Bevorzugt ist eine Variante des erfindungsgemäßen Verfahrens, bei der die Nachfüllmenge vorkonfektioniert ist. Dies vereinfacht die Bestimmung der nachgefüllten Salzmenge. Regeneriersalz-Tabletten werden handelsüblich in 25kg-Säcken vertrieben. Wird ein kompletter Sack in das Vorratsgefäß der Wasserenthärtungsanlage eingefüllt, so ist die eingefüllte Menge exakt bekannt, und das Wiegen entfällt. Die Eingabe der eingefüllten Menge kann dann durch einfaches Quittieren, beispielsweise durch Drücken einer Eingabetaste an der Eingabevorrichtung, erfolgen. Durch Einfüllen eines kompletten Sackes an Regeneriersalz in das Vorratsgefäß ist außerdem sichergestellt, dass kein geöffneter Sack mit Regeneriersalz aufbewahrt werden muss. Dies wäre hygienisch bedenklich, da die Gefahr besteht, Verunreinigungen einzuschleusen. Die Vorratsbehälter der Wasserenthärtungsanlage sind dagegen mit einem Dekkel zum Verhindern des Eindringens von Staub und Fremdkörpern versehen. Ebenfalls verwendet werden kann beispielsweise handelsübliches Blocksalz, das üblicherweise in 2,5 kg Blöcken erhältlich ist.

Bei einer weiteren, besonders bevorzugten Verfahrensvariante wird die Anzahl an verbleibenden durchführbaren Regenerationen mittels eines Displays angezeigt. Dies ermöglicht jederzeit eine Kontrolle über den aktuellen Füllstand (ausgedrückt in verbleibenden, durchführbaren Regenerationen) im Vorratsgefäß für Regeneriersalz.

Besonders bevorzugt ist eine Verfahrensvariante, die vorsieht, dass bei einer Nachfüllung die Gesamtzahl an mit der Nachfüllmenge durchführbaren Regenerationen zur derzeitigen Anzahl an verbleibenden, durchführbaren Regenerationen aufgrund vorhergehender Nachfüllungen addiert wird. Dadurch werden noch vorhandene Restkapazitäten mitberücksichtigt, und die Bestimmung der nach einer Nachfüllung von Regeneriersalz geltenden Anzahl von verbleibenden, durchführbaren Regenerationen ist besonders realitätsnah.

Bei einer bevorzugten Verfahrensvariante ist vorgesehen, dass eine Alarmmeldung ausgelöst wird, wenn die Anzahl an verbleibenden, durchführbaren Regenerationen eine vorgegebene Mindestzahl unterschreitet. Damit ist sichergestellt, dass der Benutzer der Wasserenthärtungsanlage rechtzeitig gewarnt wird, wenn die noch vorhandene Salzmenge nur noch für wenige Regenerationen ausreicht und Salz nachgefüllt werden muss. Die Alarmmeldung kann beispielsweise ausgelöst werden, wenn nur noch drei Regenerationen durchgeführt werden können. Es können auch mehrere, unterschiedliche Alarmmeldungen (Warnsignale) verwendet werden, z.B. eine erste Alarmmeldung für ein bald notwendiges Auffüllen des Vorratsgefäßes und eine zweite Alarmmeldung für eine unmittelbar bevorstehende vollständige Leerung des Vorratsgefäßes. Als Alarmmeldungen eignen sich insbesondere optische Signale, akustische Signale und/oder Funksignale, die beispielsweise auf ein Mobiltelefon (Handy) übertragen werden.

Bevorzugt ist auch eine Variante des erfindungsgemäßen Verfahrens, die vorsieht, dass die Wasserenthärtungsanlage weiterhin eine Elektrolysevorrichtung zur Erzeugung einer Desinfektionslösung aus der Regeneriermittellösung umfasst, und dass eine Alarmmeldung ausgelöst wird, wenn der Elektrolysestrom einen Grenzwert unterschreitet. Wasserenthärtungsanlagen nach DIN 19636-100 müssen durch geeignete Maßnahmen einen Schutz vor Verkeimung sicherstellen. Hierzu wird beispielsweise während der Regeneration aus einem Teil der Sole elektrolytisch Chlor erzeugt. Der Elektrolysestrom hängt bei vorgegebener Spannung und Elektrolysenzellengeometrie von der Solekonzentration ab. Bei Salzmangel wird der Elektrolysestrom entsprechend sinken und die elektronische Steuereinrichtung löst eine Alarmmeldung aus. In diesem Fall muss sofort Salz nachgefüllt werden, weil die Sole bereits verdünnt ist und die Regeneration nicht mehr ordnungsgemäß durchgeführt werden kann. Die Alarmmeldung kann sozusagen als letzte Warnung verstanden werden, weil die Salzreserven aufgebraucht sind. Ein Alarm kann beispielsweise ausgelöst werden, wenn der Elektrolysestrom auf einen Wert zwischen 80 und 90% seines ursprünglichen Wertes gesunken ist. Die Kontrolle der Regeneriermittellösung mittels eines Elektrolysestromes kann besonders kostengünstig realisiert werden, da die Chlorelektrolysenzelle neben ihrer Keimschutzfunktion diese Zusatzfunktion übernimmt. Alarmmeldungen können wiederum insbesondere optisch, akustisch, oder über Funk erfolgen.

Eine andere, bevorzugte Verfahrensvariante sieht vor, dass die Wässerenthärtungsanlage weiterhin einen Leitfähigkeitssensor zur Messung der Leitfähigkeit der Regeneriermittellösung umfasst, und dass eine Alarmmeldung ausgelöst wird, wenn die Leitfähigkeit der Regeneriermittellösung einen Grenzwert unterschreitet. Über den Leitfähigkeitssensor kann ebenfalls die Solekonzentration überwacht werden, um so eine Erschöpfung des Salzvorrats festzustellen. Leitfähigkeitssensoren sind besonders preisgünstig. Sie können an jeder beliebigen Stelle, die mit der Regeneriermittellösung in Kontakt kommt, positioniert werden. Eine Alarmmeldung kann bei dieser Variante beispielsweise ausgelöst werden, wenn die Leitfähigkeit der Regeneriermittellösung auf einen Wert zwischen 80 und 90% seines ursprünglichen Wertes gesunken ist. In diesem Fall muss sofort Salz in das Vorratsgefäß nachgefüllt werden, weil eine Regeneration nicht mehr ordnungsgemäß durchgeführt werden kann und somit die Gefahr eines Härtedurchbruches besteht.

Bei einer anderen Weiterbildung der letzten und/oder der vorletzten Verfahrensvariante werden Elektroden der Elektrolysevorrichtung oder des Leitfähigkeitssensors vor Kontakt mit der Regeneriermittellösung mit einem korrosionsbeständigen Überzug beschichtet. Dadurch kann die Lebensdauer eines Leitfähigkeitssensors erhöht werden. Als Überzüge eigenen sich beispielsweise Platin oder Edelmetallmischoxide. Diese sind chemisch in Salzsole besonders resistent.

In den Rahmen der vorliegenden Erfindung fällt auch eine Wasserenthärtungsanlage umfassend Mittel zur Durchführung eines oben beschriebenen, erfindungsgemäßen Verfahrens.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Die Erfindung ist in der Zeichnung dargestellt und wird anhand von Ausführungsbeispielen näher erläutert. Es zeigt:

Fig. 1    ein Ablaufdiagramm eines erfindungsgemäßen Verfahrens, mit Bestimmung des Chlorelektrolysestroms zur Salzfüllstandskontrolle;

Fig. 2    ein Ablaufdiagramm eines erfindungsgemäßen Verfahrens, mit Leitfähigkeitssensor in der Sole und Wasserstopp;

Fig. 3    eine schematische Darstellung einer erfindungsgemäßen Wasserenthärtungsanlage zur Durchführung des erfindungsgemäßen Verfahrens.

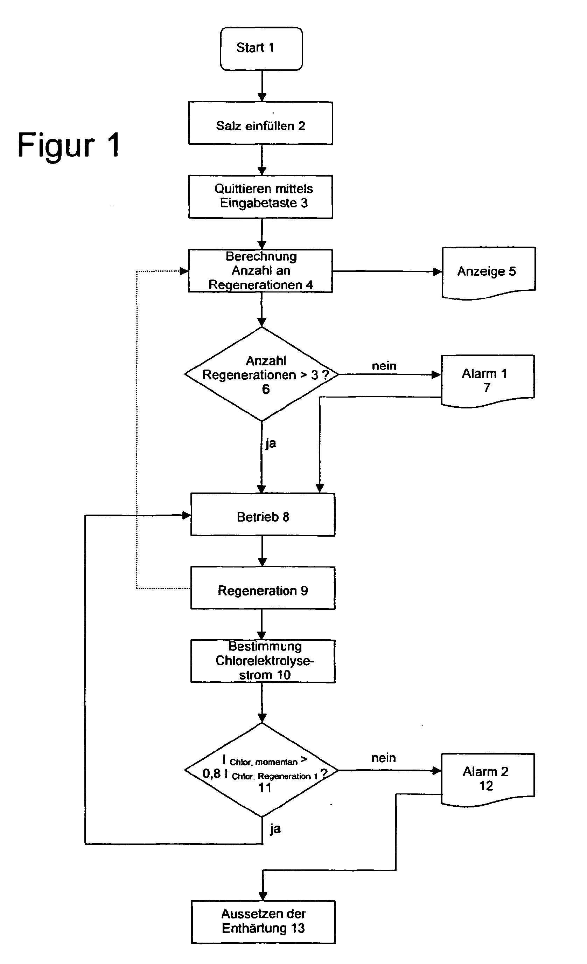

Fig. 1 zeigt ein Ablaufdiagramm eines erfindungsgemäßen Verfahrens zum Betrieb einer Wasserenthärtungsanlage mit einer Chlorelektrolysezelle.

Zu Beginn ("Start" 1) des Betriebes der Wasserenthärtungsanlage wird eine definierte Menge an Regeneriersalz in ein dafür vorgesehenes Vorratsgefäß eingefüllt ("Salz einfüllen" 2). Die eingefüllte Menge kann durch Wiegen vorab bestimmt werden. Einfacher wird jedoch eine vorkonfektionierte Menge eingefüllt.

Handelsübliches Regeneriersalz ist in 25 kg Säcken als Tablettensalz erhältlich. Durch Einfüllen eines kompletten Sackes in das Vorratsgefäß der Wasserenthärtungsanlage ist die für Regenerationen zur Verfügung stehende Menge an Salz exakt bekannt; eine Bestimmung der Salzmenge durch Wiegen oder beispielsweise Ablesen einer Skala entfällt. Es wird darüber hinaus vermieden, dass Restmengen an Salz in einem geöffneten Sack gelagert werden. Hier kann das Eindringen von Staub und Fremdkörpern zu hygienischen Beeinträchtigungen führen. Dagegen sind Salzvorratsgefäße von Wasserenthärtungsanlagen nach DIN EN 14743 mit einem Deckel ausgestattet, so dass das bevorratete Salz geschützt ist. Alternativ zu Salztabletten kann handelsübliches Blocksalz eingefüllt werden. Derartige Salzblöcke sind üblicherweise in Form von 2,5kg-Blöcken erhältlich.

Das eingefüllte Salz wird direkt nach dem Einfüllen mittels einer Eingabetaste an einer elektronischen Steuereinrichtung quittiert ("Quittieren mittels Eingabetaste" 3). Dies kann beispielsweise ein Tastendruck für einen komplett eingefüllten Sack mit 25 kg Tablettensalz sein. Eine andere Möglichkeit wäre ein Tastendruck pro Stück eingefülltem Blocksalz. Alternativ kann die in das Vorratsgefäß eingefüllte Menge an Regeneriersalz auch über eine Zahlentastatur eingegeben werden.

Die eingefüllte Menge an Regeneriersalz wird mittels eines in der Steuereinrichtung hinterlegten, anlagentypischen Umrechnungsfaktors in eine Gesamtzahl an Regenerationen, die mit dieser (zusätzlich eingefüllten) Salzmenge durchführbar sind, umgerechnet ("Berechnung der Anzahl an Regenerationen" 4). Der Umrechnungsfaktor wird in der Regel einmalig werksseitig gemäß DIN EN 14743 bestimmt und in der Steuereinrichtung abgespeichert. Zur ermittelten Gesamtzahl an durchführbaren Regenerationen wird gegebenenfalls noch eine Restanzahl an Regenerationen addiert, die aus früheren Einfüllvorgängen resultiert. Die resultierende (aktuelle) Anzahl an verbleibenden, durchführbaren Regenerationen wird mittels eines Displays angezeigt ("Anzeige" 5), so dass der Betreiber der Wasserenthärtungsanlage jederzeit über den aktuellen Stand informiert ist.

Wird eine Mindestanzahl an noch durchführbaren Regenerationen unterschritten (vgl. "Anzahl der Regenerationen >3 ?" 6), so wird der Betreiber durch ein erstes Alarmsignal vorgewarnt ("Alarm 1" 7). Die Anlage kann weiterhin betrieben werden und liefert weiches Wasser ("Betrieb" 8), jedoch muss in absehbarer Zeit Regeneriersalz nachgefüllt werden. Als Grenzwert für eine Alarmauslösung eignen sich z.B. drei verbleibende Regenerationen. Es sind genügend Reserven vorhanden, so dass die Wasserenthärtungsanlage noch eine gewisse Zeit lang weiches Wasser liefert. In dieser Zeit kann dann Regeneriersalz nachgefüllt werden.

Bei jeder Regeneration ("Regeneration" 9) wird die Anzahl der verbleibenden durchführbaren Regenerationen um 1 reduziert (vgl. "Berechnung Anzahl Regenerationen" 4). Man beachte, dass eine Erschöpfung der Enthärtungsvorrichtung bevorzugt automatisch festgestellt wird (etwa über Messung der gesamten Weichwasserentnahme seit der letzten Regeneration) und ebenfalls bevorzugt automatisch dann eine Regeneration ausgelöst wird. Sobald der Grenzwert von drei verbleibenden Regenerationen erreicht ist (vgl. "Anzahl Regenerationen > 3 ?" 6), sendet die elektronische Steuereinrichtung ein Alarmsignal ("Alarm 1" 7, siehe oben). Dies kann ein optisches und/oder akustisches Signal sein, ebenso kann ein Alarm funktechnisch beispielsweise auf ein Handy übertragen werden. Der Grenzwert kann werksseitig vorgegeben sein oder er wird individuell in die Steuereinrichtung einprogrammiert.

Es ist zu beachten, dass Wasserenthärtungsanlagen nach DIN 19636-100 spätestens nach vier Tagen automatisch eine Regeneration durchführen, auch wenn die Enthärtungskapazität noch nicht ausgeschöpft ist. Damit werden längere Stagnationszeiten, die hygienisch bedenklich sind, vermieden. Bei hohem Wasserverbrauch und hartem Wasser kann die Zeit zwischen zwei Regenerationen naturgemäß deutlich kürzer sein.

DIN 19636-100 schreibt weiterhin vor, dass der Schutz vor Verkeimung durch geeignete Maßnahmen sicherzustellen ist. Hierzu wird während der Regeneration ("Regeneration" 9) ein Teil der Salzsole zu Desinfektionszwecken elektrolytisch in Chlor umgewandelt. Der Elektrolysestrom hängt bei vorgegebener Spannung und Elektrolysenzellengeometrie von der Solekonzentration ab und wird während der Regeneration vermessen ("Bestimmung Elektrolysestrom" 10). Bei Salzmangel wird der Elektrolysestrom entsprechend sinken (Vgl. "$I_{Chlor, momentan} > 0,8 \ I_{Chlor, Regeneration \ 1}$ ?" 11) und die elektronische Steuereinrichtung löst ein zweites Alarmsignal aus ("Alarm 2" 12). In diesem Fall muss sofort Salz nachgefüllt werden, weil die Sole bereits verdünnt ist und die Regeneration nicht mehr ordnungsgemäß durchgeführt werden kann. Das Alarmsignal wird im Ausführungsbeispiel ausgelöst, wenn der Elektrolysestrom um mindestens 20% gesunken ist bezüglich des Elektrolysestromes, der während einer vorherigen Regeneration mit ausreichenden Salzvorräten geflossen ist.

Das zweite Alarmsignal kann sozusagen als letzte Warnung verstanden werden, weil die Salzreserven aufgebraucht sind. Falls Salz nicht sofort nachgefüllt wird, kann keine Regeneration mehr durchgeführt werden, und es kommt zum Härtedurchbruch ("Aussetzen der Enthärtung" 13).

Die Chlorelektrolysezelle besitzt mit der gleichzeitigen Verwendung als Keimschutzvorrichtung nach DIN 19636-100 und als Salzmangelanzeige eine Doppelfunktion.

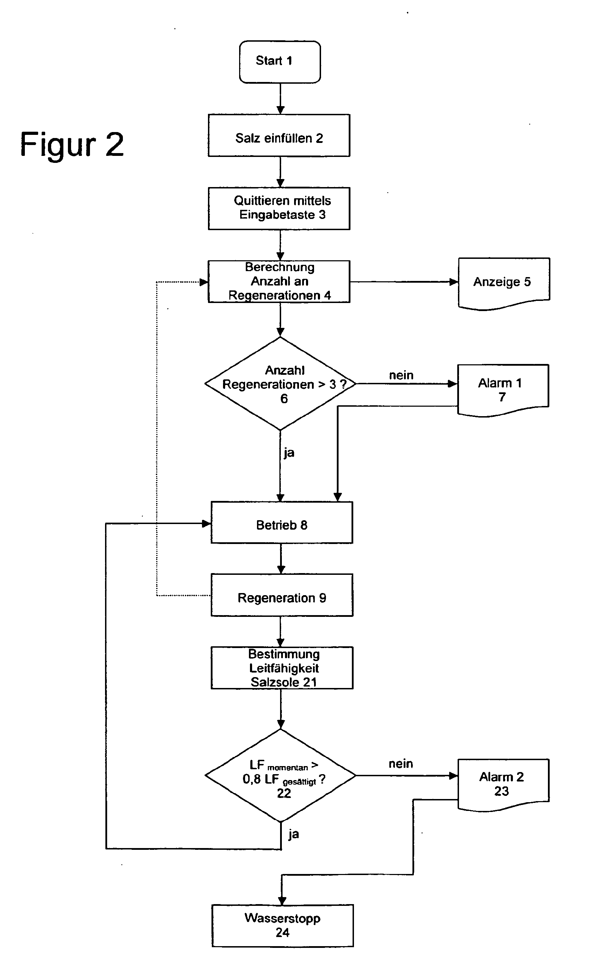

In der erfindungsgemäßen Verfahrensvariante gemäß **Fig. 2** - zu der nur die Unterschiede in Hinblick auf die Verfahrensvariante von Fig. 1 erläutert werden - wird die Konzentration der Regeneriermittellösung während einer Regeneration ("Regeneration" 9) mit einem Leitfähigkeitssensor überwacht ("Bestimmung Leitfähigkeit Salzsole" 21). Handelsübliche Leitfähigkeitssensoren sind kostengünstig und kompakt. Sie können im Vorratsgefäß selbst oder in einer Zuleitung zur Enthärtungsvorrichtung bzw. zum Ionentauscherharz positioniert werden.

Bei Salzmangel sinkt die Leitfähigkeit der Regeneriermittellösung durch die zunehmende Verdünnung mehr und mehr, bis schließlich eine ordnungsgemäße Durchführung einer Regeneration nicht mehr gewährleistet ist (vgl. Prüfung "$LF_{momentan} > 0,8 \ LF_{gesättigt}$ ?" 22). Die Steuereinrichtung löst dann ein Alarmsignal ("Alarm 2" 23) aus. Das Alarmsignal wird im Ausführungsbeispiel ausgelöst, wenn die Leitfähigkeit der gesättigten Sole um 20% gesunken ist. Salz muss dann sofort nachgefüllt werden. Falls dies nicht geschieht, kann das erschöpfte Harz nicht mehr regeneriert werden, und es kommt zum Härtedurchbruch. In der Verfahrensvariante von Fig. 2 unterbricht ein von der elektronischen Steuervorrichtung angesteuerter Wasserstopp dann die Wasserversorgung ("Wasserstopp" 24).

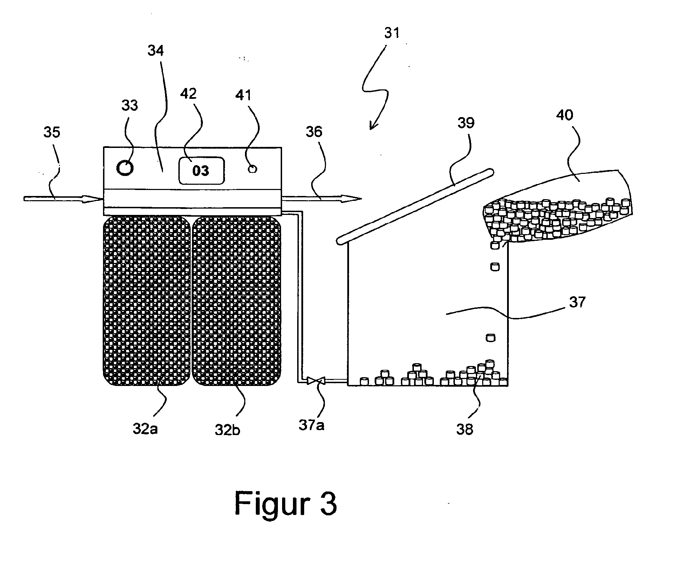

Die **Fig. 3** zeigt in schematischer Darstellung eine erfindungsgemäße Wasserenthärtungsanlage 31 zur Durchführung eines erfindungsgemäßen Verfahrens.

Die Wasserenthärtungsanlage 31 verfügt über eine Enthärtungsvorrichtung mit zwei Tanks 32a, 32b, die jeweils ein Ionentauscherharz enthalten, wobei die Tanks 32a, 32b im Wechsel betrieben werden können (Während einer Regeneration des einen Tanks dient nur der andere zur Weichwasserbereitung und umgekehrt). Die Betriebsbereitschaft der Wasserenthärtungsanlage 31 kann durch ein Lichtsignal 33 an einem Steuerkopf angezeigt werden.

Die Wasserenthärtungsanläge 31 verfügt über eine elektronische Steuereinrichtung 34, die hier in den Steuerkopf integriert ist, welcher auch diverse Ventile zur Steuerung des Wasserflusses aufweist (nicht näher dargestellt). Zulaufendes Hartwasser 35 wird durch den gerade im Betrieb befindlichen Tank (hier 32a links) der Enthärtungsvorrichtung enthärtet, so dass enthärtetes Wasser 36 ablaufseitig zur Verfügung steht.

Die Wasserenthärtungsanlage 31 verfügt außerdem über Mittel zur automatischen Regeneration der Enthärtungsvorrichtung bzw. der Tanks 32a, 32b. Dazu ist ein Vorratsgefäß 37 vorgesehen, in dem festes Regeneriersalz 38 in Tablettenform bevorratet ist. Im Vorratsgefäß 37 wird durch einfließendes Wasser (nicht näher dargestellt) eine Salzsole angemischt, die zur Regeneration in einen der Tanks 32a, 32b überführt werden kann. Dazu wird das Regenerationsventil 37a angesteuert.

Das Vorratsgefäß 37 weist einen Deckel 39 auf, mit dem der Innenraum des Vorratsgefäßes 37 abgeschlossen werden kann. Zum Nachfüllen eines Sacks 40 einer vorkonfektionierten Menge an festem Regeneriersalz (hier ein 25kg-Sack 40) wird der Deckel 39 geöffnet. Das Einfüllen des Sacks 40 wird an einer Eingabevorrichtung 41 (hier ein einfacher Quittungsknopf) manuell bestätigt; dadurch wird die Steuereinrichtung 34 informiert, dass weitere 25kg Regeneriersalz für Regenerationen im Vorratsgefäß 37 zur Verfügung stehen. Sodann kann die Steuereinrichtung 34 die Anzahl der verbleibenden, durchführbaren Regenerationen neu berechnen. Die aktuelle Anzahl an verbleibenden, durchführbaren Regenerationen wird an einem Display 42 ständig angezeigt. Bei jeder Regeneration sinkt die angezeigte Anzahl um eins. Wenn die Anzahl an verbleibenden, durchführbaren Regenerationen auf drei oder weniger fällt, gibt das Lichtsignal 33 durch Blinken einen Hinweis auf die nun notwendige Nachfüllung von Regeneriersalz; zusätzlich kann ein akustisches Alarmsignal ausgegeben werden.

**Patentansprüche**

1. Verfahren zum Betrieb einer Wasserenthärtungsanlage (31), wobei die Wasserenthärtungsanlage (31) umfasst

 - eine Enthärtungsvorrichtung, insbesondere umfassend mindestens einen Tank (32a, 32b) mit einem Ionentauscherharz,
 - ein Vorratsgefäß (37), in dem festes Regeneriersalz (38) zur Herstellung einer Regeneriermittellösung bevorratet ist,
 - eine elektronische Steuereinrichtung (34), insbesondere zur automatischen Auslösung einer Regeneration der Enthärtungsvorrichtung mit Regeneriermittellösung, und
 - eine Eingabevorrichtung (41) zur Eingabe einer Menge an festem Regeneriersalz (38),

 wobei die Steuereinrichtung (34) im Betrieb der Wasserenthärtungsanlage (31) die Erschöpfung des Vorrats an festem Regeneriersalz (38) überwacht, **dadurch gekennzeichnet,**

 - **dass** der Steuereinrichtung (34) mittels der Eingabevorrichtung (41) diejenige Menge an festem Regeneriersalz (38) übermittelt wird, die bei einer Nachfüllung des Vorratsgefäßes (37) in das Vorratsgefäß (37) eingefüllt wird, im folgenden genannt Nachfüllmenge,
 - **dass** die Steuereinrichtung (34) mittels eines in der Steuereinrichtung (34) hinterlegten Umrechnungsfaktors aus der Nachfüllmenge eine Gesamtzahl an mit der Nachfüllmenge durchführbaren Regenerationen ableitet, wobei der Umrechnungsfaktor als ein durchschnittlicher Salzverbrauch pro Regeneration gewählt ist,
 - und **dass** nach jeder Regeneration der Enthärtungsvorrichtung eine Anzahl an verbleibenden, durchführbaren Regenerationen um 1 reduziert wird.

2. Verfahren nach Anspruch 1, **dadurch gekennzeichnet, dass** die Nachfüllmenge vorkonfektioniert ist.

3. Verfahren nach Anspruch 1 oder 2, **dadurch gekennzeichnet, dass** die Anzahl an verbleibenden durchführbaren Regenerationen mittels eines Displays (42) angezeigt wird.

4. Verfahren nach einem der vorhergehenden Ansprüche, **dadurch gekennzeichnet, dass** bei einer Nachfüllung die Gesamtzahl an mit der Nachfüllmenge durchführbaren Regenerationen zur derzeitigen Anzahl an verbleibenden, durchführbaren Regenerationen aufgrund vorhergehender Nachfüllungen addiert wird.

5. Verfahren nach einem der vorhergehenden Ansprüche, **dadurch gekennzeichnet, dass** eine Alarmmeldung ausgelöst wird, wenn die Anzahl an verbleibenden, durchführbaren Regenerationen eine vorgegebene Mindestzahl unterschreitet.

6. Verfahren nach einem der vorhergehenden Ansprüche, **dadurch gekennzeichnet,**
 **dass** die Wasserenthärtungsanlage (31) weiterhin eine Elektrolysevorrichtung zur Erzeugung einer Desinfektionslösung aus der Regeneriermittellösung umfasst,
 und **dass** eine Alarmmeldung ausgelöst wird, wenn der Elektrolysestrom einen Grenzwert unterschreitet.

7. Verfahren nach einem der vorhergehenden Ansprüche, **dadurch gekennzeichnet,**
 **dass** die Wasserenthärtungsanlage (31) weiterhin einen Leitfähigkeitssensor zur Messung der Leitfähigkeit der Regeneriermittellösung umfasst,
 und **dass** eine Alarmmeldung ausgelöst wird, wenn die Leitfähigkeit der Regeneriermittellösung einen Grenzwert unterschreitet.

8. Verfahren nach einem der Ansprüche 6 oder 7, **dadurch gekennzeichnet, dass** Elektroden der Elektrolysevorrichtung oder des Leitfähigkeitssensors vor Kontakt mit der Regeneriermittellösung mit einem korrosionsbeständigen Überzug beschichtet werden.

9. Wasserenthärtungsanlage (31), umfassend Mittel zur Durchführung eines Verfahrens nach einem der vorhergehenden Ansprüche.

**Claims**

1. Method for operating a water softening system (31), the water softening system (31) comprising

 - a softening device, in particular, comprising at least one tank (32a, 32b) with an ion exchanger resin,
- a storage container (37) containing solid regeneration salt (38) for producing a regenerant solution,
- an electronic control device (34), in particular, for automatically triggering regeneration of the softening device using regenerant solution, and
- an input device (41) for inputting a quantity of solid regeneration salt (38),
wherein the control device (34) monitors depletion of the supply of solid regeneration salt (38) during operation of the water softening system (31),
**characterized in that**
- by means of the input device (41), the quantity of solid regeneration salt (38) which is filled into the storage container (37) during a refilling operation of the storage container (37), further called refilling quantity, is transmitted to the control device (34),
- the control device (34) derives from the refilling quantity an overall number of regenerations that can be performed with the refilling quantity using a conversion factor stored in the control device (34), wherein the conversion factor is selected as an average salt consumption per regeneration,
- and that after each regeneration of the softening device, the number of remaining regenerations that can be performed is reduced by 1.

2. Method according to claim 1, **characterized in that** the refilling quantity is preassembled.

3. Method according to claim 1 or 2, **characterized in that** the number of remaining regenerations that can be performed is displayed by means of a display (42).

4. Method according to any one of the preceding claims, **characterized in that** during a refilling operation, the overall number of regenerations that can be performed with the refilling quantity is added to the instantaneous number of remaining regenerations that can be performed due to previous refilling operations.

5. Method according to any one of the preceding claims, **characterized in that** an alarm signal is triggered when the number of remaining regenerations that can be performed falls below a predetermined minimum number.

6. Method according to any one of the preceding claims, **characterized in that** the water softening system (31) also comprises an electrolysis device for generating a disinfectant solution from the regenerant solution, and an alarm signal is triggered when the electrolytic current falls below a threshold value.

7. Method according to any one of the preceding claims, **characterized in that** the water softening system (31) also comprises a conductivity sensor for measuring the conductivity of the regenerant solution, and an alarm signal is triggered when the conductivity of the regenerant solution falls below a threshold value.

8. Method according to any one of the claims 6 or 7, **characterized in that** electrodes of the electrolysis device or of the conductivity sensor are coated with a corrosion-resistant coating prior to contact with the regenerant solution.

9. Water softening system (31) comprising means for performing a method according to any one of the preceding claims.

## Revendications

1. Procédé de fonctionnement d'une installation d'adoucissement d'eau (31), dans lequel l'installation d'adoucissement d'eau (31) comprend :

- un dispositif adoucisseur, en particulier comprenant au moins un réservoir (32a, 32b) avec une résine échangeuse d'ions,
- un réservoir de stockage (37), dans lequel est stocké un sel de régénération solide (38) pour fabriquer une solution d'agent de régénération,
- un dispositif de commande électronique (34), en particulier pour déclencher automatiquement une régénération du dispositif adoucisseur avec une solution d'agent de régénération, et
- un dispositif d'alimentation (41) pour introduire une quantité de sel de régénération solide (38), dans lequel le dispositif de commande (34), lors du
fonctionnement de l'installation d'adoucissement d'eau (31), contrôle l' extraction de sel de régénération solide (38) du réservoir de stockage, **caractérisé en ce que**
- le dispositif de commande (34) achemine au moyen du dispositif d'alimentation (41) la quantité de sel de régénération solide (38) qui est déversée dans le réservoir de stockage (37) lors d'une recharge de ce réservoir de stockage (37),
- le dispositif de commande (34), au moyen d'un facteur de conversion mémorisé dans le dispositif de commande (34), déduit de la quantité de recharge un nombre total de régénérations réalisables avec la quantité de recharge, moyennant quoi le facteur de conversion est choisi comme la consommation moyenne de sel par régénération, et

- après chaque régénération du dispositif adoucisseur, on réduit la quantité de régénérations réalisables restantes de 1.

2. Procédé selon la revendication 1, **caractérisé en ce que** la quantité de recharge est préparée à l'avance.

3. Procédé selon la revendication 1 ou la revendication 2, **caractérisé en ce que** le nombre de régénérations réalisables restantes est montré au moyen d'un affichage (42).

4. Procédé selon l'une quelconque des revendications précédentes, **caractérisé en ce que**, lors d'une recharge, le nombre total de régénérations réalisables avec la quantité de recharge est ajouté au nombre actuel de régénérations réalisables restantes sur la base de recharges précédentes.

5. Procédé selon l'une quelconque des revendications précédentes, **caractérisé en ce que** l'on déclenche un message d'alarme lorsque le nombre de régénérations réalisables restantes se situe en dessous d'un nombre minimal prédéterminé.

6. Procédé selon l'une quelconque des revendications précédentes, **caractérisé en ce que** :

   l'installation d'adoucissement d'eau (31) comprend en outre un dispositif d'électrolyse pour produire une solution de désinfection à partir de la solution d'agent de régénération, et un message d'alarme est déclenché lorsque le courant d'électrolyse passe en dessous d'une valeur limite.

7. Procédé selon l'une quelconque des revendications précédentes, **caractérisé en ce que** :

   l' installation d' adoucissement d'eau (31) comprend en outre un capteur de conductibilité pour mesurer la conductibilité de la solution d'agent de régénération, et un message d'alarme est déclenché si la conductibilité de la solution d'agent de régénération descend en dessous d'une valeur limite.

8. Procédé selon l'une quelconque des revendications 6 ou 7, **caractérisé en ce que** des électrodes du dispositif d'électrolyse ou du capteur de conductibilité sont revêtus d'une couche résistant à la corrosion avant contact avec la solution d'agent de régénération.

9. Installation d'adoucissement d'eau (31), comprenant un agent pour réaliser un procédé selon l'une quelconque des revendications précédentes.

**Figur 1**

# Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60120826 T2
- EP 1147736 B1
- DE 4425706 B4
- EP 1331203 A2